# EUROPEAN PATENT APPLICATION

(11) **EP 3 979 658 A1**
(43) Date of publication of application: **06.04.2022**
(21) Application number: 20860210.2
(22) Date of filing: 06.08.2020
(51) Int. Cl.: H04N 21/44, H04N 21/439, H04N 21/43, H04N 21/85

(54) **PROCESSING METHOD, PROCESSING DEVICE, ELECTRONIC DEVICE, AND STORAGE MEDIUM**

(30) Priority: 06.09.2019 CN 201910843918
(71) Applicant: GUANGDONG OPPO MOBILE TELECOMMUNICATIONS CORP., LTD., Dongguan, Guangdong 523860 (CN)
(72) Inventor: CHEN, Jiayu, Dongguan, Guangdong 523860 (CN)
(74) Representative: Mewburn Ellis LLP
(86) International application number: PCT/CN2020/107389
(87) International publication number: WO 2021/042933

(57) **Abstract**

A processing method, a processing device, an electronic device, and a storage medium are provided. The processing method is applied to an electronic device and includes the following. An audio is obtained. The audio includes multiple rhythm points. Multiple video materials are obtained. The audio and the multiple video materials are processed according to the rhythm points to form a target video, to enable that in the target video the video materials are switched at at least one of the rhythm points of the audio.

## Description

### CROSS-REFERENCE TO RELATED APPLICATION(S)

This application claims priority to and benefits of Chinese Patent Application No. 201910843918.5, filed to the China National Intellectual Property Administration on September 6, 2019, the disclosure of which is hereby incorporated by reference in its entirety.

### TECHNICAL FIELD

This disclosure relates to the technical field of image processing, and more particularly to a processing method, a processing device, an electronic device, and a storage medium.

### BACKGROUND

In the related art, multiple video materials selected by a user can be clipped and spliced according to a preset template to form a video. However, since the user lacks experience or sense of beauty, clipping and splicing of the video materials is low in efficiency and poor in effect.

### SUMMARY

A processing method, a processing device, an electronic device, and a storage medium are provided in the disclosure.

Implementations of the disclosure provide a processing method. The processing method is applied to an electronic device and includes the following. An audio is obtained. The audio includes multiple rhythm points. Multiple video materials are obtained. The audio and the multiple video materials are processed according to the rhythm points to form a target video, to enable that in the target video the video materials are switched at at least one of the rhythm points of the audio.

Implementations of the disclosure provide a processing device. The processing device is applied to an electronic device. The processing device includes a first obtaining module, a second obtaining module, and a processing module. The first obtaining module is configured to obtain an audio. The audio includes multiple rhythm points. The second obtaining module is configured to obtain multiple video materials. The processing module is configured to process the audio and the multiple video materials according to the rhythm points to form a target video, to enable that in the target video the video materials are switched at at least one of the rhythm points of the audio.

An electronic device in implementations of the disclosure includes a memory and a processor. The processor is configured to obtain an audio, where the audio includes multiple rhythm points. The processor is further configured to obtain multiple video materials, and process the audio and the multiple video materials according to the rhythm points to form a target video, to enable that in the target video the video materials are switched at at least one of the rhythm points of the audio.

A non-transitory computer-readable storage medium including computer executable instructions is provided. The computer executable instructions, when executed by one or more processors, cause the one or more processors to perform the processing method described above.

Additional aspects and advantages of the implementations will be partially described in the following, and part of them will become obvious from the following description, or be learnt via the practice of the disclosure.

### BRIEF DESCRIPTION OF THE DRAWINGS

The described-above and/or additional aspects and advantages of the disclosure will become apparent and be easily understood from illustration of the implementations in conjunction with the following drawings.
FIG. 1 is a schematic flow chart illustrating a processing method according to implementations of the disclosure.
FIG. 2 is a schematic diagram illustrating a scene to which a processing method is applied according to implementations of the disclosure.
FIG. 3 is a schematic diagram illustrating modules of a processing device according to implementations of the disclosure.
FIG. 4 is a schematic diagram illustrating another scene to which a processing method is applied according to implementations of the disclosure.
FIG. 5 is a schematic flow chart illustrating a processing method according to other implementations of the disclosure.
FIG. 6 is a schematic diagram illustrating yet another scene to which a processing method is applied according to implementations of the disclosure.
FIG. 7 is a schematic flow chart illustrating a processing method according to other implementations of the disclosure.
FIG. 8 is a schematic flow chart illustrating a processing method according to other implementations of the disclosure.
FIG. 9 is a schematic flow chart illustrating a processing method according to other implementations of the disclosure.
FIG. 10 is a schematic flow chart illustrating a processing method according to other implementations of the disclosure.
FIG. 11 is a schematic flow chart illustrating a processing method according to other implementations of the disclosure.
FIG. 12 is a schematic diagram illustrating modules of an electronic device according to implementations of the disclosure.

### DETAILED DESCRIPTION

The following describes implementations of the disclosure in detail. Examples of the implementations are illustrated in the accompanying drawings, where same or like reference numerals throughout the disclosure represent same or like elements or elements having same or similar functions. The implementations described below with reference to the accompanying drawings are exemplary and are intended to explain the disclosure rather than limit the disclosure.

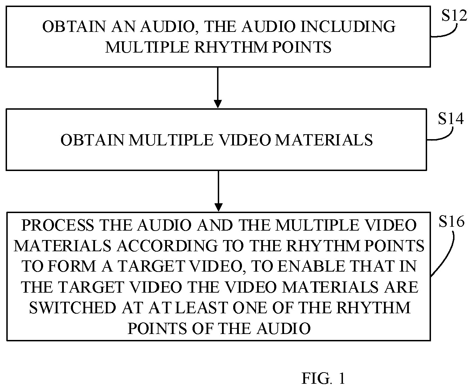

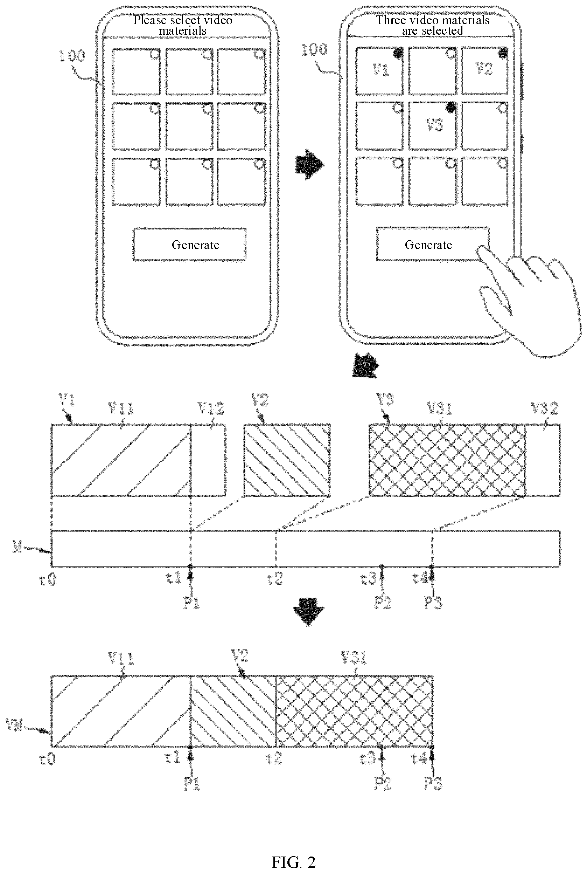

Referring to FIG. 1 and FIG. 2, a processing method according to implementations of the disclosure is applied to an electronic device 100. The processing method includes the following.

At S12, an audio is obtained, where the audio includes multiple rhythm points.

At S14, multiple video materials are obtained.

At S16, the audio and the multiple video materials are processed according to the rhythm points to form a target video, to enable that in the target video the video materials are switched at at least one of the rhythm points of the audio.

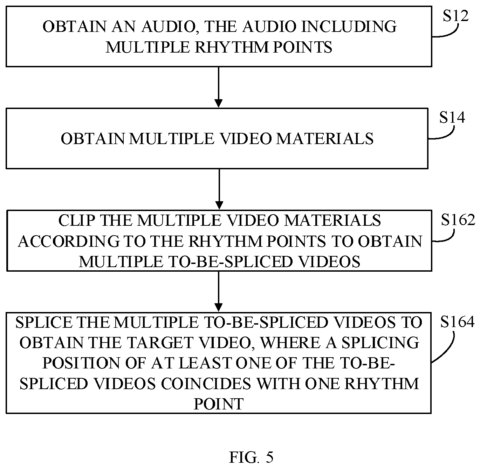

Referring to FIG. 5, in some implementations, operations at S16 include the following.

At S162, the multiple video materials are clipped (cropped) according to the rhythm points to obtain multiple to-be-spliced videos.

At S164, the multiple to-be-spliced videos are spliced to obtain the target video, where a splicing position of at least one of the to-be-spliced videos coincides with one rhythm point.

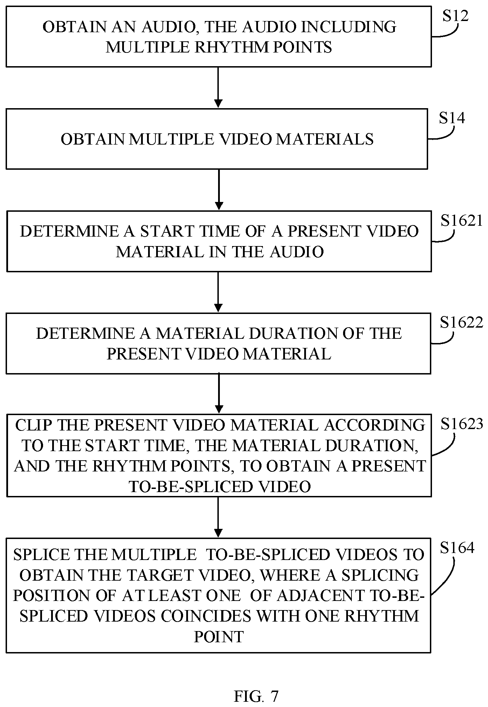

Referring to FIG. 7, in some implementations, operations at S162 include the following.

At S1621, a start time of a present video material in the audio is determined.

At S1622, a material duration of the present video material is determined.

At S1623, the present video material is clipped according to the start time, the material duration, and the rhythm points, to obtain a present to-be-spliced video.

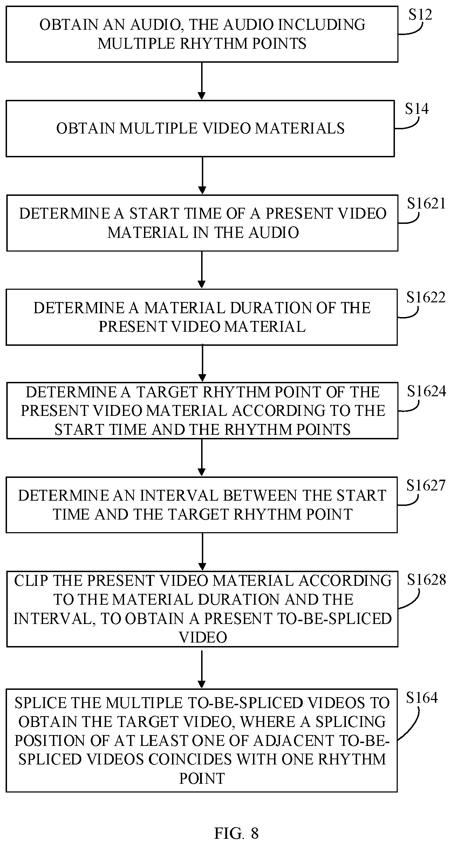

Referring to FIG. 8, in some implementations, operations at S1623 include the following.

At S1624, a target rhythm point of the present video material is determined according to the start time and the rhythm points.

At S1627, an interval between the start time and the target rhythm point is determined.

At S1628, the present video material is clipped according to the material duration and the interval.

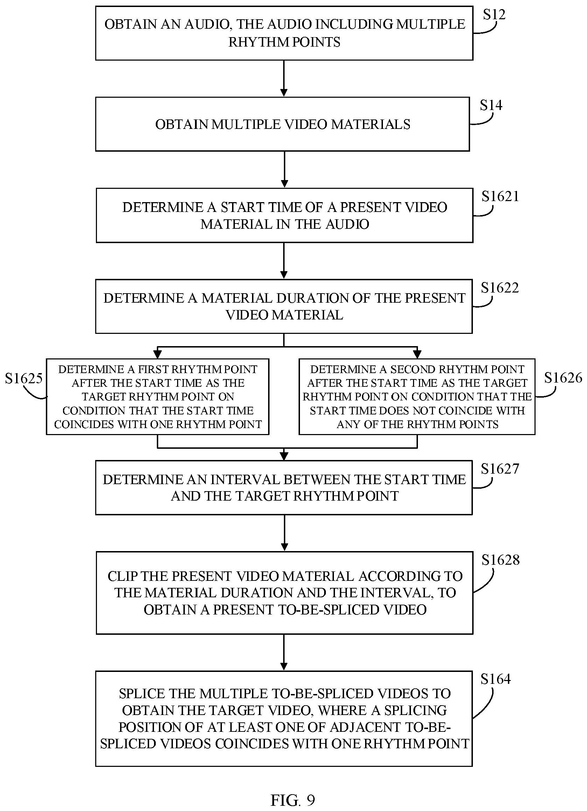

Referring to FIG. 9, in some implementations, operations at S1624 include the following.

At S1625, a first rhythm point after the start time is determined as the target rhythm point on condition that the start time coincides with one rhythm point.

At S1626, a second rhythm point after the start time is determined as the target rhythm point on condition that the start time does not coincide with any of the rhythm points.

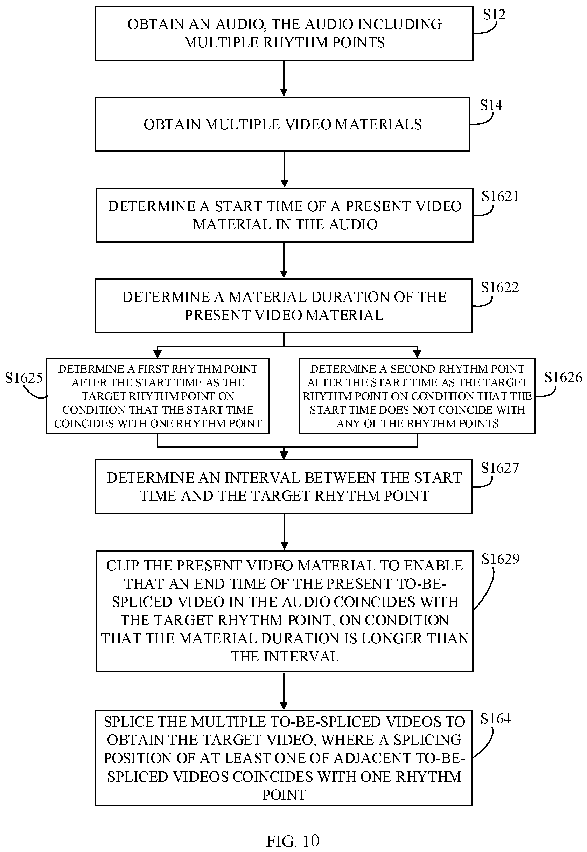

Referring to FIG. 10, in some implementations, operations at S1628 include the following.

At S1629, the present video material is clipped to enable that an end time of the present to-be-spliced video in the audio coincides with the target rhythm point, on condition that the material duration is longer than the interval.

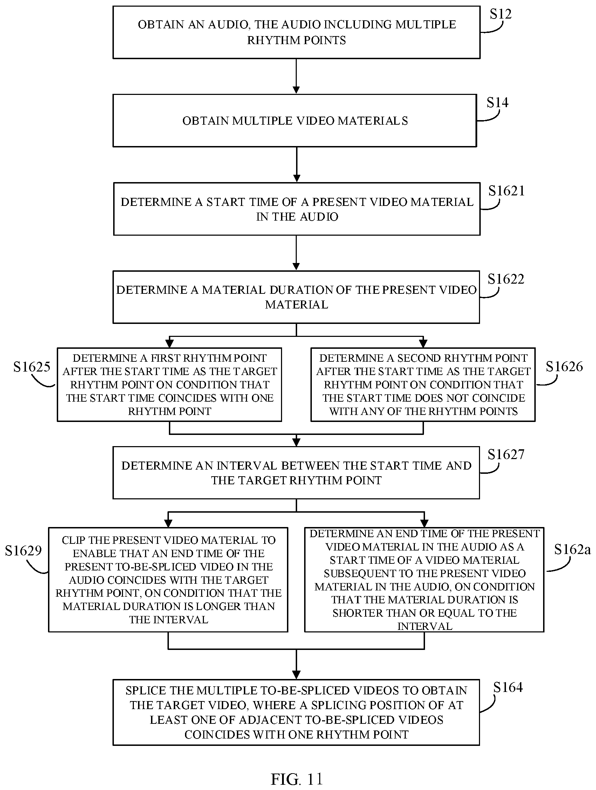

Referring to FIG. 11, in some implementations, operations at S1628 include the following.

At S162a, an end time of the present video material in the audio is determined as a start time of a video material subsequent to the present video material in the audio, on condition that the material duration is shorter than or equal to the interval.

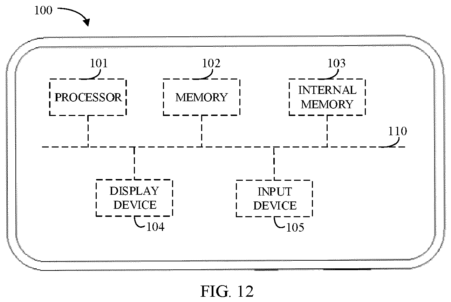

Referring to FIG. 12, in some implementations, the processor 101 is configured to obtain an audio, where the audio includes multiple rhythm points. The processor 101 is further configured to obtain multiple video materials, and process the audio and the multiple video materials according to the rhythm points to form a target video, to enable that in the target video the video materials are switched at at least one of the rhythm points of the audio.

In some implementations, the processor 101 is configured to clip the multiple video materials according to the rhythm points to obtain multiple to-be-spliced videos, and splice the multiple to-be-spliced videos to obtain the target video. A splicing position of at least one of the to-be-spliced videos coincides with one rhythm point.

In some implementations, the processor 101 is configured to determine a start time of a present video material in the audio, determine a material duration of the present video material, and clip the present video material according to the start time, the material duration, and the rhythm points, to obtain a present to-be-spliced video.

In some implementations, the multiple video materials are arranged in sequence. The processor 101 is configured to determine a start time of the audio as the start time of the present video material in the audio on condition that the present video material is a first video material, or determine an end time of a video material previous to the present video material as the start time of the present video material in the audio on condition that the present video material is not the first video material.

In some implementations, the processor 101 is configured to determine the material duration of the present video material by reading attribute data of the present video material.

In some implementations, the processor 101 is configured to determine a target rhythm point of the present video material according to the start time and the rhythm points, determine an interval between the start time and the target rhythm point, and clip the present video material according to the material duration and the interval.

In some implementations, the processor 101 is configured to determine a first rhythm point after the start time as the target rhythm point on condition that the start time coincides with one rhythm point, or determine a second rhythm point after the start time as the target rhythm point on condition that the start time does not coincide with any of the rhythm points.

In some implementations, the processor 101 is configured to clip the present video material to enable that an end time of the present to-be-spliced video in the audio coincides with the target rhythm point, on condition that the material duration is longer than the interval.

In some implementations, the processor 101 is configured to determine an end time of the present video material in the audio as a start time of a video material subsequent to the present video material in the audio, on condition that the material duration is shorter than or equal to the interval.

As illustrated in FIG. 1 and FIG. 2, a processing method is provided in implementations of the disclosure. The processing method is applied to an electronic device 100. The processing method includes the following.

At S12, an audio is obtained, where the audio includes multiple rhythm points.

At S14, multiple video materials are obtained.

At S16, the audio and the multiple video materials are processed according to the rhythm points to form a target video, to enable that in the target video the video materials are switched at at least one of the rhythm points of the audio.

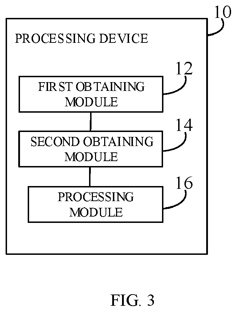

As illustrated in FIG. 3, a processing device 10 is provided in implementations of the disclosure. The processing device 10 is applied to an electronic device 100. The processing device 10 includes a first obtaining module 12, a second obtaining module 14, and a processing module 16. The first obtaining module 12 is configured to obtain an audio. The audio includes multiple rhythm points. The second obtaining module 14 is configured to obtain multiple video materials. The processing module 16 is configured to process the audio and the multiple video materials according to the rhythm points to form a target video, to enable that in the target video the video materials are switched at at least one of the rhythm points of the audio.

According to the processing method and the processing device 10 in implementations of the disclosure, the audio and the multiple video materials are processed according to the rhythm points of the audio to form the target video, to enable that in the target video the video materials are switched at the at least one of the rhythm points of the audio. In this way, the video materials may match the rhythm points of the audio without manual adjustment by the user, such that expressiveness and impact of the target video can be enhanced simply and conveniently, thereby making effect of the target video better.

Specifically, the electronic device 100 may be any of various types of computer system devices that are mobile or portable and perform wireless communication. Specifically, the electronic device 100 may be a mobile phone, a portable game device, a laptop computer, a personal digital assistant (PDA), a portable android device (PAD), a portable Internet device, a wearable device, a vehicle-mounted terminal, a navigator, a music player, a data storage device, or the like.

For convenience of illustration, in the implementations of the disclosure, a mobile phone is taken as an example of the electronic device 100 to illustrate the processing method performed by the electronic device 100 in the implementations of the disclosure, which is not intended to limit the type of the electronic device 100.

It can be understood that in the related art, multiple video materials selected by a user can be clipped and spliced according to a preset template to form a video. However, since the user lacks experience or sense of beauty, clipping and splicing of the video materials is low in efficiency and poor in effect. In addition, the preset template may include an audio, and the user needs to manually adjust the video materials to enable that videos match the audio, which is relatively tedious.

For example, in the related art, rhythm points and a length of each of to-be-spliced videos that are to be filled between each two adjacent rhythm points are marked on an interface. The user needs to select video materials that are to be filled between each two adjacent rhythm points one by one and manually clip the video materials, to enable that a final spliced target video matches the audio. However, in case that the rhythm points are relatively dense, it may lead to tedious user operations. Furthermore, if a video material is too short to be filled between two adjacent rhythm points, the video material cannot be used.

In contrast, in implementations, after multiple video materials are selected by the user, the video materials can be switched at at least one of the rhythm points of the audio in the target video without manual clipping and adjustment of the video materials, so as to enable that the video materials match the rhythm points of the audio. In this way, music and pictures of the target video are changed simultaneously, such that expressiveness and impact are more powerful, and the effect may be better.

At S12, the audio can be used as background music of the target video. The audio can be selected from an audio library or by selecting a video template by the user. The processing method may include the following. A video template is obtained, where the video template includes an audio. The audio and the multiple video materials are processed according to the rhythm points to form the target video as follows. The audio and the multiple video materials are processed according to the rhythm points and the video template.

Specifically, the video template may refer to a series of method schemes for processing video materials. The schemes may be embodied in program codes. The video template is used for helping the user quickly combine resources to generate a target video. The video template may include filters, animation stickers, an audio, rhythm points of the audio, and so on. There is no restriction on specific contents of the video template. It can be understood that different target videos can be obtained by applying a same video material to different video templates.

The rhythm point is a key time point obtained according to fluctuation or rhythm of the audio. Specifically, the rhythm points can be marked in the audio in advance, and thus the rhythm points of the audio and the audio can be obtained simultaneously. Certainly, the rhythm points may not be marked in the audio in advance. After the audio is obtained, the audio can be processed to obtain the rhythm points of the audio. The obtained rhythm points can be stored in the electronic device 100, or can also be uploaded to a server along with the audio, such that the audio with the marked rhythm points can be downloaded from the server by other users.

At S16, the audio and the multiple video materials are processed according to the rhythm points to form the target video. That is, video editing is performed on the multiple video materials. In addition to clipping and splicing the multiple video materials and adding an audio to the multiple video materials, the video editing may further include adding filters, letters, animated stickers and so on to the multiple video materials. Thereafter, a final target video can be generated.

In addition, "switching the video materials at the at least one of the rhythm points of the audio in the target video" refers to that the target video is switched from a picture of a video material to a picture of another video material at the rhythm point of the audio.

In an example in FIG. 2, three video materials are selected by the user. The three video materials are respectively video material V1, video material V2, and video material V3. When "Generate" is clicked by the user, processing of the three video materials is conducted. Audio M obtained includes three rhythm points. The three rhythm points are respectively rhythm point P1, rhythm point P2, and rhythm point P3. The processing device 10 processes audio M and video material V1, video material V2, and video material V3 according to the rhythm points to form target video VM.

Specifically, the processing device 10 clips video material V1 to obtain to-be-spliced video V11 and discarded segment V12. A start time of to-be-spliced video V11 in audio M is t0 and an end time of to-be-spliced video V11 in audio M is t1. Time t1 coincides with rhythm point P1. Discarded segment V12 is not involved in synthesis of target video VM

The processing device 10 does not cut (clip) video material V2, that is, video material V2 as a whole is used as a to-be-spliced video. A start time of to-be-spliced video V2 in audio M is t1, and an end time of to-be-spliced video V2 in audio M is t2. Time t1 coincides with rhythm point P1.

The processing device 10 clips video material V3 to obtain to-be-spliced video V31 and discarded segment V32. A start time of to-be-spliced video V31 in audio M is t2 and an end time of to-be-spliced video V31 in audio M is t4. Time t4 coincides with rhythm point P3. Discarded segment V32 is not involved in synthesis of target video VM

That is, in target video VM, to-be-spliced video V11 obtained from video material V1 and to-be-spliced video V2 obtained from video material V2 are switched at rhythm point P1 of audio M.

In this way, during playing of target video VM, at rhythm point P1 of the audio, when the user hears rhythm changes, the user can also see that the target video VM is switched from to-be-spliced video V11 to to-be-spliced video V2, such that both visual and auditory stimulation of target video VM can be received. Therefore, impact of target video VM is more powerful, and music and pictures of target video VM are more matched, such that the user experience is better.

In addition, it can be understood that in the target video, at one rhythm point of the audio, switching between video materials before and after the rhythm point is conducted. Alternatively, at each of multiple rhythm points (such as 2, 3, 4, 6, or other number of rhythm points) of the audio, switching between video materials before and after the rhythm point is conducted.

In an example in FIG. 2, in target video VM, at one rhythm point (i.e., rhythm point PI) of the audio, switching between video materials before and after the rhythm point is conducted. That is, switching between video material V1 before rhythm point P1 and video material V2 after rhythm point P1 is conducted.

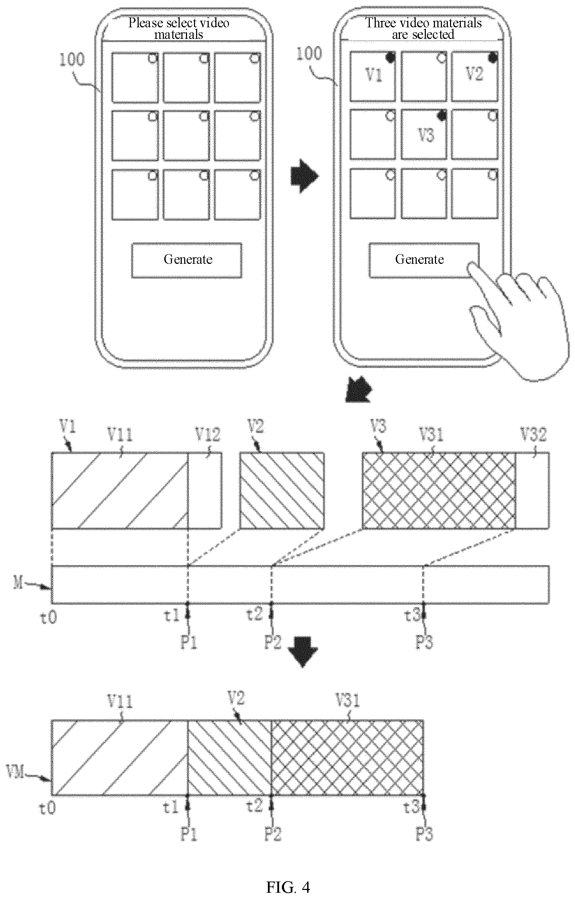

Referring to FIG. 4, in target video VM, at each of two rhythm points (i.e., rhythm point P1 and rhythm point P2) of the audio, switching between video materials before and after the rhythm point is conducted. That is, at rhythm point P1, switching between video material V1 before rhythm point P1 and video material V2 after rhythm point P1 is conducted. At rhythm point P2, switching between video material V2 before rhythm point P1 and video material V3 after rhythm point P1 is conducted.

Specifically, the processing device 10 clips video material V1 to obtain to-be-spliced video V11 and discarded segment V12. A start time of to-be-spliced video V11 in audio M is t0 and an end time of to-be-spliced video V11 in audio M is t1. Time t1 coincides with rhythm point P1. Discarded segment V12 is not involved in synthesis of target video VM

The processing device 10 does not cut video material V2, that is, video material V2 as a whole is used as a to-be-spliced video. A start time of to-be-spliced video V2 in audio M is t1, and an end time of to-be-spliced video V2 in audio M is t2. Time t1 coincides with rhythm point P1. Time t2 coincides with rhythm point P2.

The processing device 10 clips video material V3 to obtain to-be-spliced video V31 and discarded segment V32. A start time of to-be-spliced video V31 in audio M is t2 and an end time of to-be-spliced video V31 in audio M is t3. Time t2 coincides with rhythm point P2. Time t3 coincides with rhythm point P3. Discarded segment V32 is not involved in synthesis of target video VM

Referring to FIG. 5, in some implementations, operations at S16 include the following.

At S162, the multiple video materials are clipped according to the rhythm points to obtain multiple to-be-spliced videos.

At S164, the multiple to-be-spliced videos are spliced to obtain the target video, where a splicing position of at least one of the to-be-spliced videos coincides with one rhythm point.

Correspondingly, the processing module 16 is configured to clip multiple video materials according to rhythm points to obtain multiple to-be-spliced videos, and splice the multiple to-be-spliced videos to obtain a target video, where a splicing position of at least one of the to-be-spliced videos coincides with one rhythm point.

In this way, the audio and the multiple video materials are processed according to the rhythm points to form the target video, to enable that in the target video the video materials are switched at at least one of the rhythm points of the audio. It can be understood that the multiple video materials each have an uncertain length. Therefore, if multiple video materials are directly spliced, it cannot be ensured that the splicing position of the at least one of the to-be-spliced videos coincides with one rhythm point.

According to the processing method in implementations, the multiple video materials are clipped according to the rhythm points to obtain the multiple to-be-spliced videos, and the multiple to-be-spliced videos are spliced to obtain the target video, which may avoid that the splicing position cannot coincide with the rhythm point due to the uncertain length of the video material, and thus it can be ensured that in the target video the video materials are switched at at least one of the rhythm points of the audio.

Specifically, in operations at S162, the multiple video materials and the multiple to-be-spliced videos are in one-to-one correspondence. In other words, clipping a video material according to the rhythm point can obtain a to-be-spliced video corresponding to the video material. It can be understood that clipping of the video material includes following two situations. A first situation is that the video material is clipped into a to-be-spliced video and a discarded segment, where the to-be-spliced video is involved in synthesis of the target video and the discarded segment is not involved in the synthesis of the target video. A second situation is that the video material is not cut, that is, the video material as a whole is used as the to-be-spliced video. There is no restriction on the detailed manner in which the video material is clipped.

In an example in FIG. 2, clipping of video material V1 and video material V3 corresponds to the above first situation, and clipping of video material V2 corresponds to the above second situation.

In operations at S164, the multiple to-be-spliced videos are spliced to obtain the target video as follows. As illustrated in FIG. 2, all the video materials are clipped to obtain all to-be-spliced videos, and then all the to-be-spliced videos are spliced. Alternatively, some of the video materials are clipped to obtain corresponding to-be-spliced videos that are then spliced to the target video. Thereafter, a next video material is clipped to obtain a corresponding to-be-spliced video that is then spliced to the target video. There is no restriction on forms of clipping and splicing.

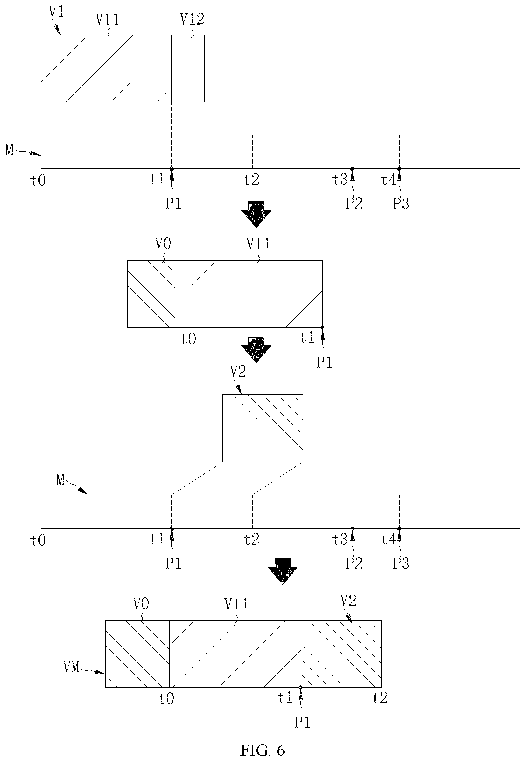

Referring to FIG. 6, in one example, the processing device 10 first clips video material V1 to obtain to-be-spliced video V11 and discarded segment V12, and splices to-be-spliced video V11 with to-be-spliced video V0 previous to to-be-spliced video V11. Discarded segment V12 is not involved in synthesis of target video VM.

Thereafter, the processing device 10 clips video material V2. Specifically, the processing device 10 does not cut video material V2, that is, video material V2 as a whole is used as a to-be-spliced video. To-be-spliced video V2 is spliced to a video formed by splicing to-be-spliced video V0 and to-be-spliced video V11, to obtain target video VM. In the target video, a splicing position between to-be-spliced video V11 and to-be-spliced video V2 coincides with rhythm point P1.

Referring to FIG. 7, in some implementations, operations at S162 include the following.

At S1621, a start time of a present video material in the audio is determined.

At S1622, a material duration of the present video material is determined.

At S1623, the present video material is clipped according to the start time, the material duration, and the rhythm points, to obtain a present to-be-spliced video.

Correspondingly, the processing module 16 is configured to determine a start time of a present video material in the audio, determine a material duration of the present video material, and clip the present video material according to the start time, the material duration, and the rhythm points to obtain a present to-be-spliced video.

As such, the multiple video materials can be clipped according to the rhythm points to obtain the multiple to-be-spliced videos. As mentioned above, a rhythm point is a key time point obtained according to fluctuation or rhythm of the audio. The "splicing" means that an end time of a to-be-spliced video is a start time of a subsequent to-be-spliced video. Therefore, clipping the present video material according to the start time, the material duration, and the rhythm points can make clipping of the video material suitable, so that the end time of the to-be-spliced video coincides with one rhythm point of the audio.

Specifically, the multiple video materials are arranged in sequence, and operations at S1621 include the following. On condition that the present video material is a first video material, a start time of the audio is determined as the start time of the present video material in the audio. On condition that the present video material is not the first video material, an end time of a video material previous to the present video material is determined as the start time of the present video material in the audio. As such, the start time of the present video material in the audio can be determined.

At S1622, the material duration of the present video material can be determined by reading attribute data of the present video material. The attribute data may include a duration, a resolution, a frame rate, a format, etc. of the present video material.

Referring to FIG. 8, in some implementations, operations at S1623 include the following.

At S1624, a target rhythm point of the present video material is determined according to the start time and the rhythm points.

At S1627, an interval between the start time and the target rhythm point is determined.

At S1628, the present video material is clipped according to the material duration and the interval.

Correspondingly, the processing module 16 is configured to determine a target rhythm point of the present video material according to the start time and the rhythm points, determine an interval between the start time and the target rhythm point, and clip the present video material according to the material duration and the interval.

Therefore, the present video material can be clipped according to the start time, the material duration, and the rhythm points, to obtain the present to-be-spliced video. It can be understood that the target rhythm point is a rhythm point at which two adjacent to-be-spliced videos are switched. In other words, at the target rhythm point, one to-be-spliced video ends, and another to-be-spliced video starts.

It can be understood that clipping the present video material according to the material duration and the interval between the start time and the target rhythm point can enable that the end time of the clipped to-be-spliced video coincides with the target rhythm point, such that a splicing position between the to-be-spliced video and a to-be-spliced video subsequent to the to-be-spliced video coincides with the target rhythm point. In this way, switching of the to-be-spliced videos at the target rhythm point can be simply and conveniently realized.

Specifically, in operations at S1627, the interval between the start time and the target rhythm point can be determined by the target rhythm point minus the start time. As described above, the rhythm point is the key time point. Therefore, the interval can be obtained by the target rhythm point directly minus the start time. In this way, the interval can be simply and conveniently determined, thereby saving processing time and improving processing efficiency.

In an example in FIG. 2, a start time of video material V1 in audio M is t0, the target rhythm point is rhythm point P1, and thus the interval between start time t0 and target rhythm point P1 is t1-t0. Since the material duration of video material V1 is longer than the interval, video material V1 is clipped to obtain to-be-spliced video V11 and discarded segment V12, to enable a duration of to-be-spliced video V11 to be equal to the interval between start time t0 to target rhythm point P1. Therefore, an end time of to-be-spliced video V11 in audio M is t1, which coincides with target rhythm point P1.

Referring to FIG. 9, in some implementations, operations at S1624 include the following.

At S1625, a first rhythm point after the start time is determined as the target rhythm point on condition that the start time coincides with one rhythm point.

At S1626, a second rhythm point after the start time is determined as the target rhythm point on condition that the start time does not coincide with any of the rhythm points.

Correspondingly, the processing module 16 is configured to determine a first rhythm point after the start time as the target rhythm point on condition that the start time coincides with one rhythm point, or determine a second rhythm point after the start time as the target rhythm point on condition that the start time does not coincide with any of the rhythm points.

Therefore, the target rhythm point of the present video material can be determined according to the start time and the rhythm points. It can be understood that when the start time of the present video material coincides with the rhythm point, the present video material and a to-be-spliced video previous to the present video material are switched at the rhythm point. In this case, the first rhythm point after the start time is determined as the target rhythm point of the present video material. The present video material is clipped to enable that an end time of the present to-be-spliced video coincides with the target rhythm point. As such, the present to-be-spliced and a subsequent to-be-spliced may be switched at the target rhythm point, such that impact of the target video can be further enhanced.

When the start time does not coincide with any of the rhythm points, it can be determined that a to-be-spliced video previous to the present video material does not end at the rhythm point. In other words, a material duration of a previous video material is shorter than an interval between a start time of the previous video material in the audio and the target rhythm point. That is, the previous video material is not enough to reach the target rhythm point of the previous video material. In this case, the second rhythm point after the start time can be determined as the target rhythm point. Therefore, when the previous video material is used in the target video, by means of the present video material, switching between video materials at the second rhythm point after the start time can be achieved, which may avoid that the previous video material cannot be used for splicing due to a short duration of the previous video material. In this way, the time requirement for video materials can be reduced, and all video materials can be used, such that the user experience can be improved.

In an example in FIG. 2, start time t1 of video material V2 coincides with rhythm point PI.Therefore, a first rhythm point after start time t1, i.e., rhythm point P2, can be determined as a target rhythm point of video material V2.

Start time t2 of video material V3 does not coincide with any of rhythm point P1, rhythm point P2, and rhythm point P3. Therefore, a second rhythm point after start time t2, i.e., rhythm point P4, can be determined as a target rhythm point of video material V3.

In this way, even if the material duration of video material V2 is shorter than the interval t3-t1, video material V2 can also be involved in synthesis of target video VM, which may not cause video material V2 to be unusable. In addition, even if video material V2 ends before rhythm point P2 and cannot match rhythm point P2, by means of video material V3, it is also possible to enable that an end time of to-be-spliced video V31 in audio M coincides with rhythm point P3. It can be understood that another to-be-spliced video after to-be-spliced video V31 can be spliced, so that switching of to-be-spliced videos can match another rhythm point.

Referring to FIG. 10, in some implementations, operations at S1628 include the following.

At S1629, the present video material is clipped to enable that an end time of the present to-be-spliced video in the audio coincides with the target rhythm point, on condition that the material duration is longer than the interval.

Correspondingly, the processing module 16 is configured to clip the present video material to enable that an end time of the present to-be-spliced video in the audio coincides with the target rhythm point, on condition that the material duration is longer than the interval.

As such, the present video material is clipped according to the material duration and the interval. It can be understood that when the material duration is longer than the interval, it can be determined that the present video material is enough to reach the target rhythm point. If the present video material is not clipped, the present video material may miss the target rhythm point, which may cause that switching between the present to-be-spliced video and a subsequent to-be-spliced video cannot occur at the target rhythm point. Therefore, a redundant part of the present video material can be clipped to enable that the end time of the present to-be-spliced video in the audio coincides with the target rhythm point. Therefore, switching between the present to-be-spliced video and the subsequent to-be-spliced video at the target rhythm point can be simply and conveniently achieved.

In an example in FIG. 2, since the material duration of video material V1 is longer than interval t1-t0, video material V1 can be clipped into to-be-spliced video V11 and discarded segment V12. Therefore, an end time of to-be-spliced video V11 in audio M is t1, which coincides with target rhythm point P1, such that to-be-spliced video V11 and to-be-spliced video V2 can be switched at target rhythm point P1.

Referring to FIG. 11, in some implementations, operations at S1628 include the following.

At S162a, an end time of the present video material in the audio is determined as a start time of a video material subsequent to the present video material in the audio, on condition that the material duration is shorter than or equal to the interval.

Correspondingly, the processing module 16 is configured to determine an end time of the present video material in the audio as a start time of a video material subsequent to the present video material in the audio, on condition that the material duration is shorter than or equal to the interval.

As such, the present video material is clipped according to the material duration and the interval. It can be understood that when the material duration is shorter than or equal to the interval, the present video material is not enough to reach the target rhythm point of the present video material. In this case, the end time of the present video material in the audio is determined as the start time of the video material subsequent to the present video material in the audio. Therefore, when the present video material is used in the target video, by means of the video material subsequent to the present video material, it is possible to achieve switching between to-be-spliced videos at the second rhythm point after the start time, which may avoid that the present video material cannot be used for splicing due to a short duration of the present video material. In this way, the time requirement for video materials can be reduced, and all video materials can be used, such that the user experience can be improved.

In an example in FIG. 2, the material duration of video material V2 is shorter than interval t3-t1, and thus end time t2 of video material V2 in audio M can be determined as a start time of a video material (i.e., video material V3) subsequent to video material V2 in audio M. In this way, even if the material duration of video material V2 is shorter than the interval, video material V2 can also be involved in synthesis of target video VM, that is, video material V2 cannot be caused to be unusable. In addition, even if video material V2 ends before rhythm point P2 and cannot match rhythm point P2, by means of video material V3, it is also possible to enable that an end time of to-be-spliced video V31 in audio M coincides with rhythm point P3. It can be understood that another to-be-spliced video after to-be-spliced video V31 can be spliced, so that switching of to-be-spliced videos can match another rhythm point.

Referring to FIG. 12, an electronic device 100 is provided in implementations of the disclosure. The electronic device 100 includes a processor 101 and a memory 102. The memory 102 stores one or more programs which, when executed by the processor 101, cause the processor 101 to perform the processing method of any implementation described above.

For example, perform S12: obtaining an audio, where the audio includes multiple rhythm points; S14: obtaining multiple video materials; S16: processing the audio and the multiple video materials according to the rhythm points to form a target video, to enable that in the target video the video materials are switched at at least one of the rhythm points of the audio.

Implementations of the disclosure further provide a computer-readable storage medium. The computer-readable storage medium includes one or more non-transitory computer-readable storage media including computer executable instructions. The computer executable instructions, when executed by one or more processors 101, cause the one or more processors 101 to perform the processing method of any implementation described above.

According to the electronic device 100 and the computer-readable storage medium in implementations of the disclosure, the audio and the multiple video materials are processed according to the rhythm points of the audio to form the target video, to enable that in the target video the video materials are switched at the at least one of the rhythm points of the audio. In this way, the video materials may match the rhythm points of the audio without manual adjustment by the user, such that the expressiveness and impact of the target video can be enhanced simply and conveniently, thereby making the effect of the target video better.

FIG. 12 is a schematic diagram illustrating internal modules of an electronic device 100 of implementations of the disclosure. The electronic device 100 includes a processor 101, a memory 102 (e.g., a non-transitory storage medium), an internal memory 103, a display device 104, and an input device 105 that are coupled with each other through a system bus 110. The memory 102 of the electronic device 100 stores an operating system and computer-readable instructions. The computer-readable instructions can be executed by the processor 101 to perform the processing method of any implementation described above.

For example, perform S12: obtaining an audio, where the audio includes multiple rhythm points; S14: obtaining multiple video materials; S16: processing the audio and the multiple video materials according to the rhythm points to form a target video, to enable that in the target video the video materials are switched at at least one of the rhythm points of the audio.

The processor 101 may be configured to provide computing and control capabilities to support operation of the entire electronic device 100. The internal memory 103 of the electronic device 100 provides an environment for execution of computer-readable instructions in the memory 102. The input device 105 may be a key, a trackball, or a touchpad that is provided on a housing of the electronic device 100 or may be an external keyboard, an external touchpad, or a mouse, or the like.

As can be seen, according to the processing method, the processing device 10, the electronic device 100, and the computer-readable storage medium in implementations of the disclosure, video materials can be automatically clipped and spliced according to the rhythm points of the audio, so as to generate with one click the target video with strong rhythm. The user does not need to manually adjust the length of each video material, which can simplify the operation of the user. In addition, the compatibility of video materials is good, that is, even if the duration of the video material is short, the video material can also be involved in synthesis of the target video, thereby avoiding that the video material cannot be used. Furthermore, even if the rhythm point is missed due to that a short video material is used in the target video, switching between two adjacent to-be-spliced videos in the target video can be corrected to the rhythm point by using other long enough video materials in the subsequent splicing process. In this way, the operation efficiency of video clipping and splicing can be improved, so as to obtain the final effect.

Those skilled in the art can understand that the structure illustrated in the figure is merely a schematic diagram of part of the structure related to the solution of the disclosure, and does not constitute a limitation on the electronic device to which the solution of the disclosure is applied. The electronic device may include more or fewer components than illustrated in the figure, or may combine some components, or may adopt different arrangements of components.

Those of ordinary skill in the art will appreciate that all or part of processes of implementing the method of the above-described implementations may be accomplished by instructing related hardware through a computer program, and the program may be stored in a non-transitory computer-readable storage medium. The program, when executed, may perform processes including implementations of the above-described methods. The storage medium can be a magnetic disk, an optical disk, a read-only memory (ROM) and so on.

The above implementations merely represent some implementations of the disclosure, and the description is relatively specific and detailed, but it should not be understood as a limitation to the patent scope of the disclosure. It should be pointed out that for those of ordinary skill in the art, various modifications and improvements can be made without departing from the concept of the disclosure, and all the modifications and improvements shall fall within the protection scope of the disclosure. Therefore, the patent protection scope of the disclosure shall be subject to the appended claims.

## Claims

1. A processing method, being applied to an electronic device and comprising:
obtaining an audio, the audio comprising a plurality of rhythm points;
obtaining a plurality of video materials; and
processing the audio and the plurality of video materials according to the rhythm points to form a target video, to enable that in the target video the video materials are switched at at least one of the rhythm points of the audio.

2. The processing method of claim 1, wherein processing the audio and the plurality of video materials according to the rhythm points to form the target video comprises:
clipping the plurality of video materials according to the rhythm points to obtain a plurality of to-be-spliced videos; and
splicing the plurality of to-be-spliced videos to obtain the target video, wherein a splicing position of at least one of the to-be-spliced videos coincides with one rhythm point.

3. The processing method of claim 2, wherein clipping the plurality of video materials according to the rhythm points to obtain the plurality of to-be-spliced videos comprises:
determining a start time of a present video material in the audio;
determining a material duration of the present video material; and
clipping the present video material according to the start time, the material duration, and the rhythm points, to obtain a present to-be-spliced video.

4. The processing method of claim 3, wherein the plurality of video materials are arranged in sequence, and determining the start time of the present video material in the audio comprises:
determining a start time of the audio as the start time of the present video material in the audio on condition that the present video material is a first video material; or
determining an end time of a video material previous to the present video material as the start time of the present video material in the audio on condition that the present video material is not the first video material.

5. The processing method of claim 3, wherein determining the material duration of the present video material comprises:
determining the material duration of the present video material by reading attribute data of the present video material.

6. The processing method of claim 3, wherein clipping the present video material according to the start time, the material duration, and the rhythm points comprises:
determining a target rhythm point of the present video material according to the start time and the rhythm points;
determining an interval between the start time and the target rhythm point; and
clipping the present video material according to the material duration and the interval.

7. The processing method of claim 6, wherein determining the target rhythm point of the present video material according to the start time and the rhythm points comprises:
determining a first rhythm point after the start time as the target rhythm point on condition that the start time coincides with one rhythm point; or
determining a second rhythm point after the start time as the target rhythm point on condition that the start time does not coincide with any of the rhythm points.

8. The processing method of claim 6, wherein clipping the present video material according to the material duration and the interval comprises:
clipping the present video material to enable that an end time of the present to-be-spliced video in the audio coincides with the target rhythm point, on condition that the material duration is longer than the interval.

9. The processing method of claim 6, wherein clipping the present video material according to the material duration and the interval comprises:
determining an end time of the present video material in the audio as a start time of a video material subsequent to the present video material in the audio, on condition that the material duration is shorter than or equal to the interval.

10. A processing device, being applied to an electronic device and comprising:
a first obtaining module configured to obtain an audio, the audio comprising a plurality of rhythm points;
a second obtaining module configured to obtain a plurality of video materials; and
a processing module configured to process the audio and the plurality of video materials according to the rhythm points to form a target video, to enable that in the target video the video materials are switched at at least one of the rhythm points of the audio.

11. An electronic device, comprising:
a memory; and
a processor, wherein
the processor is configured to:
obtain an audio, the audio comprising a plurality of rhythm points;
obtain a plurality of video materials; and
process the audio and the plurality of video materials according to the rhythm points to form a target video, to enable that in the target video the video materials are switched at at least one of the rhythm points of the audio.

12. The electronic device of claim 11, wherein the processor is configured to:
clip the plurality of video materials according to the rhythm points to obtain a plurality of to-be-spliced videos; and
splice the plurality of to-be-spliced videos to obtain the target video, wherein a splicing position of at least one of the to-be-spliced videos coincides with one rhythm point.

13. The electronic device of claim 12, wherein the processor is configured to:
determine a start time of a present video material in the audio;
determine a material duration of the present video material; and
clip the present video material according to the start time, the material duration, and the rhythm points, to obtain a present to-be-spliced video.

14. The electronic device of claim 12, wherein the plurality of video materials are arranged in sequence, wherein the processor is configured to:
determine a start time of the audio as the start time of the present video material in the audio on condition that the present video material is a first video material; or
determine an end time of a video material previous to the present video material as the start time of the present video material in the audio on condition that the present video material is not the first video material.

15. The electronic device of claim 12, wherein the processor is configured to determine the material duration of the present video material by reading attribute data of the present video material.

16. The electronic device of claim 13, wherein the processor is configured to:
determine a target rhythm point of the present video material according to the start time and the rhythm points;
determine an interval between the start time and the target rhythm point; and
clip the present video material according to the material duration and the interval.

17. The electronic device of claim 16, wherein the processor is configured to:
determine a first rhythm point after the start time as the target rhythm point on condition that the start time coincides with one rhythm point; or
determine a second rhythm point after the start time as the target rhythm point on condition that the start time does not coincide with any of the rhythm points.

18. The electronic device of claim 16, wherein the processor is configured to:
clip the present video material to enable that an end time of the present to-be-spliced video in the audio coincides with the target rhythm point, on condition that the material duration is longer than the interval.

19. The electronic device of claim 16, wherein the processor is configured to:
determine an end time of the present video material in the audio as a start time of a video material subsequent to the present video material in the audio, on condition that the material duration is shorter than or equal to the interval.

20. A non-transitory computer-readable storage medium comprising computer executable instructions, wherein the computer executable instructions, when executed by one or more processors, cause the one or more processors to perform the method of any of claims 1 to 9.
